# EUROPÄISCHE PATENTSCHRIFT

(11) **EP 0 472 844 B1**
(45) Veröffentlichungstag und Bekanntmachung des Hinweises auf die Patenterteilung: **03.05.1995**
(21) Anmeldenummer: 91110234.1
(22) Anmeldetag: 21.06.1991
(51) Int. Cl.: B24B 49/14, G01B 7/16, G01K 5/48, G01K 13/00, G08C 19/00, B23F 23/12

(54) **Verfahren und Vorrichtung zum Vermeiden von thermischen Überbeanpruchungen von Werkstücken beim Schleifen (Schleifbrand)**
Method and apparatus to avoid thermal overload of workpieces while grinding (overheating while grinding)
Procédé et dispositif pour éviter la surcharge thermique de pièces lors de la rectification (surchauffe de meulage)

(30) Priorität: 11.08.1990 DE 4025552
(43) Veröffentlichungstag der Anmeldung: 04.03.1992
(73) Patentinhaber: Kapp GmbH & Co. KG Werkzeugmaschinenfabrik, D-96450 Coburg (DE)
(72) Erfinder: Pickert, Werner, W-8630 Coburg (DE)
(74) Vertreter: Stenger, Watzke & Ring Patentanwälte

(56) Entgegenhaltungen:
- DE-A- 2 261 389
- US-A- 2 427 064
- US-A- 3 569 707
- US-A- 4 018 010
- US-A- 4 833 836
- WORLD PATENTS INDEX Section EI, Week 7549, Derwent Publications Ltd., London, GB; Class S, AN 75-N0569 & SU-A-455 271 (KOVALEV) 18. April 1975
- WORLD PATENTS INDEX LATEST Section PQ, Week 8605, Derwent Publications Ltd., London, GB; Class P61, AN 86-033 & SU-A-1 166 976 (MOSC ELECTRO-EROSIO) 15. Juli 1985

## Beschreibung

Die Erfindung geht aus von einem Verfahren zum Vermeiden von thermischen Überbeanspruchungen von Werkstücken beim Schleifen (Schleifbrand) gemäß dem Oberbegriff des Patentanspruches 1, wie es aus der US-A-24 27 064 bekannt ist, und umfaßt auch eine Vorrichtung zur Durchführung dieses Verfahrens und eine Verwendung dieser Vorrichtung.

Bei der Fertigung qualitativ hochwertiger Bauteile, wie beispielsweise von Zahnrädern und anderen Werkstücken mit speziellen Profilen, wird es immer wichtiger, zwecks Erlangung einer hohen Präzision und Formgenauigkeit nach der Vorbearbeitung und dem Härten eine Feinbearbeitung nachzuschalten. Als Hartbearbeitungsverfahren kommt dabei häufig das Schleifen zum Einsatz. Hierbei wird ein Aufmaß, das sich einerseits aus der Vorbearbeitung vor dem Härten und andererseits aus Härteverzügen ergibt, abgetragen, das im Falle der Hartbearbeitung von Zahnrädern meistens zwischen einem und drei Zehntel Millimeter beträgt.

Der Schleifvorgang soll durch das Abnehmen dieses Aufmaßes die endgültige Form erzeugen, für die teilweise Abweichungen von nur wenigen Mikrometern zulässig sind, vor allem bei Verzahnungen und sonstigen Profilen im Flugzeugbau. Andererseits erfordern Wirtschaftlichkeitsüberlegungen, daß die Hart- bzw. Feinbearbeitung in möglichst kurzer Zeit vorgenommen wird, um einen maximalen Werkstückausstoß pro Maschine und pro Zeiteinheit zu erreichen.

Diese beiden gegenläufigen Forderungen - einerseits hohe Genauigkeit und andererseits viel Materialabtrag pro Zeiteinheit - haben in der Vergangenheit zur Entwicklung leistungsfähiger Schleifverfahren geführt, wobei neben den konventionellen Schleifstoffen (Siliziumkarbid, Edelkorund usw.) auch Diamanten und kubisch kristallines Bornitrid (CBN) zum Einsatz kommen.

In der Praxis wird der Feinbearbeitungsvorgang mit hohen bezogenen Zeitspanvolumina, d.h. mit einer Maximalzahl abgenommener Kubikmillimeter Aufmaß pro Sekunde Schleifzeit und pro Millimeter Schleifscheibenbreite durchgeführt. Insbesondere beim Einsatz von kubisch kristallinem Bornitrid (CBN) sind hohe Zahlenwerte für das bezogene Zeitspanvolumen möglich. Anhaltswerte für ein maximales Zeitspanvolumen und damit für die Optimierung des Schleifvorganges in wirtschaftlicher Hinsicht liefert die Praxis.

Die Grenze der Optimierungsfähigkeit ist jedoch dort erreicht, wo mit derart hohen Vorschüben und Zustellungen geschliffen wird, daß die Schleifscheibe an der Kontaktfläche zum Werkstück lokal derart hohe Temperaturen erzeugt, daß thermische Gefügeveränderungen in der Werkstückrandschicht auftreten. Der Fachmann spricht hier von Schleifbrand oder Heißbrand und versteht darunter eine thermische Schädigung des Werkstückes, so daß dieses Ausschuß wird.

Für die industrielle Produktion von Zahnrädern ist daher die Schleifbrandüberwachung ein wichtiges Qualitätskriterium. In der Regel werden sogenannte Nitalätzverfahren eingesetzt, wobei stichprobenartig Werkstücke in verschiedenen Bädern geätzt werden, um daraus eine ggf. aufgetretene Änderung der Randschichten des Gefüges sichtbar zu machen. Das Verfahren ist jedoch relativ aufwendig und ermöglicht keine hundertprozentige Prüfung der geschliffenen Werkstücke.

Der Erfindung liegt die **Aufgabe** zugrunde, das Verfahren zum Vermeiden von thermischen Überbeanspruchungen von Werkstücken beim Schleifen gemäß dem Oberbegriff des Anspruches 1 so weiterzubilden, daß es einfacher anwendbar ist, und dafür eine Vorrichtung und eine Verwendung der Vorrichtung zum Schleifen von Zahnrädern anzugeben.

Diese Aufgabe wird mit den Gegenständen der Ansprüche 1 bzw. 3 gelöst. Ausgestaltungen des Verfahrens und der Vorrichtung sind in den Ansprüchen 2 und 9 bzw. 4 bis 8 angegeben.

Durch die als Istwert ermittelte Temperaturerhöhung an der dem Schleifvorgang unterworfenen Schleiffläche und durch den Vergleich dieses Istwertes mit einem Referenzwert wird während des Schleifvorganges festgestellt, ob die thermische Beanspruchung des Werkstückes durch den Schleifvorgang unterhalb des kritischen Wertes liegt, der zu Schleifbrand führt. Der Referenzwert wird für das jeweilige Werkstück unter denselben Parametern des Schleifvorganges mit einem Schleifwerkzeug ermittelt, das zum Entstehen von Schleifbrand am Referenzwerkstück geführt hat. Der Schleifvorgang beim Bearbeiten der Werkstücke im eigentlichen Herstellungsprozeß wird beendet, sobald eine Temperaturerhöhung festgestellt wird, die unter Berücksichtigung eines vorgebbaren Sicherheitsfaktors der kritischen, Schleifbrand bewirkenden Temperatur entspricht.
Auf diese Weise kann rechtzeitig eine sich ankündigende Überbeanspruchung des Werkstückes z.B. wegen Schleifscheibenverschleiß festgestellt werden. Zur Ermittlung des Istwertes und des Referenzwertes als Ersatzwert der Temperaturerhöhung werden die hierdurch bedingten geometrischen Formänderungen des Werkstückes herangezogen. Auf diese Weise entfällt eine in der Praxis schwierige Temperaturmessung an der Schleiffläche.
Dafür wird nun vorgeschlagen, die axiale Abstandsänderung der die Schleiffläche begrenzenden seitlichen Flächen des Werkstückes als Ersatzwert der Temperaturerhöhung zu messen. Da diese Flächen des Werkstückes während des Schleifvorganges gut zugänglich sind, ergibt sich eine gut realisierbare und auch im großtechnischen Einsatz einsetzbare Meßanordnung.

Zur Messung der geometrischen Formänderungen des Werkstückes können erfindungsgemäß berührende oder berührungslose Meßelemente verwendet werden, beispielsweise mechanische oder induktive Tastelemente oder Abstandssensoren.

Durch die mit Anspruch 2 vorgeschlagene periodische Überprüfung des Zustandes des Schleifwerkzeuges unter Anwendung des erfindungsgemäßen Verfahrens wird sichergestellt, daß ein rechtzeitiger Wechsel des Schleifwerkzeuges durchgeführt werden kann, bevor Schäden an den Werkstücken auftreten.

Die erfindungsgemäße Vorrichtung zum Vermeiden von thermischen - Überbeanspruchungen von Werkstücken beim Schleifen (Schleifbrand) durch das Verfahren nach Anspruch 1 oder 2 umfaßt einen Aufnahmedorn für das Werkstück dessen Schleiffläche durch zwei seitliche Flächen begrenzt ist, sowie ein Meßsystem, das mindestens eine der seitlichen Flächen in der Nähe der Schleiffläche zur Erfassung einer axialen Längenänderung kontaktiert.
Durch die im Kennzeichen des Anspruches 3 angegebenen Merkmale wird eine derartige Vorrichtung durch ihre einfache Konstruktion auch innerhalb des Arbeitsraumes einer Schleifmaschine einsetzbar, so daß ein rechtzeitiges Erkennen von thermischen Überbeanspruchungen auch im industriellen Schleifprozeß möglich ist.

Dabei umfaßt jedes Meßsystem einen Meßkörper, der mit einem an der Stirnseite des Werkstückes anliegenden Taststift und mit Meßelementen, beispielsweise Dehnmeßstreifen, versehen ist.
Vorzugsweise wird jedes Meßsystem an einem auf den Aufnahmedorn für das Werkstück aufsetzbaren Tragkörper angeordnet.

Die von den Meßsystemen ermittelten Meßwerte können per Kabel oder Funk an eine externe Auswerteschaltung übertragen werden.
Alternativ ist es möglich, im Tragkörper der Meßsysteme sowohl eine Energieversorgung, beispielsweise eine Batterie, als auch eine mit einer Anzeigevorrichtung, beispielsweise Leuchtdioden, versehene Auswerteschaltung anzuordnen.

Aus der DE-A-2261389 ist zwar eine Vorrichtung mit einem Aufnahmedorn für das Werkstück und mit einem Meßsystem zur Erfassung einer axialen Längenänderung bekannt, bei der das Meßsystem eine der beiden seitlichen Flächen des Werkstückes in der Nähe seiner Schleiffläche kontaktiert, um die axiale Abstandsänderung dieser seitlichen Flächen zu erfassen. Die bekannte Vorrichtung dient jedoch zur Ermittlung von Temperaturen, weshalb die Längenmessungen gleichzeitig bezüglich der bearbeiteten und einer nicht bearbeiteten Fläche erfolgen, um durch einen Vergleich der Meßergebnisse eine Temperaturkorrektur des Längenmeßergebnisses an der bearbeiteten Fläche vorzunehmen. Der Zweck dieser Längenmessungen unterscheidet sich somit grundlegend sowohl hinsichtlich der Aufgabenstellung als auch bezüglich der Verwendung von dem der erfindungsgemäßen Vorrichtung.

Um das erfindungsgemäße Verfahren zum Schleifen von Zahnrädern einzusetzen, kontaktieren die Taststifte von vier paarweise zusammenwirkenden Meßsystemen die seitlichen Flächen derjenigen beiden benachbarten Zähne, deren Zahnflanken und Zahngrund gerade geschliffen werden.

In der Zeichnung sind zwei Ausführungsbeispiele der Erfindung dargestellt. Es zeigen:
- Fig. 1: eine perspektivische Ansicht eines ersten Ausführungsbeispiels und
- Fig. 2: einen Längsschnitt durch eine zweite Ausführungsform.

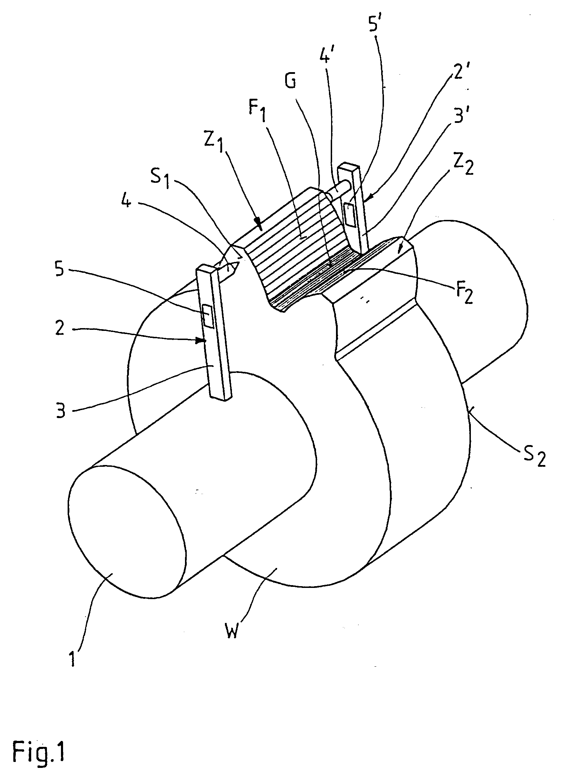

In Fig.1 ist perspektivisch ein Werkstück W dargestellt, und zwar in Form eines geradverzahnten Stirnzahnrades, von dem der besseren Übersichtlichkeit wegen lediglich die beiden Zähne Z1 und Z2 gezeichnet sind. Für die nachfolgende Erläuterung soll angenommen werden, daß die durch die einander gegenüberliegenden Zahnflanken F1 und F2 sowie den dazwischenliegenden Zahngrund G gebildete Zahnlücke geschliffen werden soll, und zwar mittels einer auf der Zeichnung nicht dargestellten Schleifscheibe. Die diesem Bearbeitungsvorgang unterliegende Schleiffläche ist in Fig.1 schraffiert dargestellt. Während des Schleifvorganges ist das Werkstück W auf einem Aufnahmedorn 1 einer nicht dargestellten Schleifmaschine angeordnet.

Durch das Schleifen der schraffiert hervorgehobenen Schleiffläche treten an dieser Schleiffläche Temperaturerhöhungen auf, die zu thermischen Gefügeveränderungen in der Werkstückrandschicht führen können, wenn diese Temperaturerhöhungen bestimmte Werte übersteigen. Eine derartige thermische Schädigung des Werkstückes wird Schleifbrand oder Heißbrand genannt.

Durch Gefügeveränderungen geschädigte Werkstücke sind Ausschuß. Es muß demzufolge dafür gesorgt werden, daß bestimmte Temperaturen in der Schleiffläche nicht überschritten werden.
Außer einem zu großen Zeitspanvolumen sind abgenutzte Schleifscheiben Ursache für derartige thermische Gefügeveränderungen.

Um das Auftreten von Schleifbrand z.B. infolge abgenutzter Schleifscheiben zu vermeiden, wird die Temperaturerhöhung an der dem Schleifvorgang unterworfenen Schleiffläche ermittelt.
Dieser Istwert wird mit einem Referenzwert verglichen, der unter denselben Parametern des Schleifvorganges mit einer Schleifscheibe an einem identischen Werkstück ermittelt worden ist. Mit einem derartigen Referenzversuch wird festgestellt, bei welcher Temperatur an der Schleiffläche Schleifbrand entsteht. Bei der Serienfertigung wird der Schleifvorgang beendet, sobald eine Temperaturerhöhung in der Schleiffläche festgestellt worden ist, die mit dem voranstehend geschilderten Vorversuch ermittelt worden ist und dem Referenzwert entspricht, der unter Berücksichtigung eines vorgebbaren Sicherheitsfaktors der kritischen, Schleifband bewirkenden Temperatur entspricht.

Da es in der Praxis Schwierigkeiten bereiten kann, die Temperatur in der Schleiffläche mit der notwendigen Genauigkeit zu messen, werden zur Ermittlung des Istwertes und des Referenzwertes als Ersatzwert der jeweiligen Temperatur die durch die Temperaturerhöhung bedingten geometrischen Formänderungen des Werkstückes herangezogen. Bei beiden Ausführungsbeispielen wird die axiale Abstandsänderung der die Schleiffläche begrenzenden seitlichen Flächen S1 und S2 des Werkstückes W als Ersatzwert der Temperaturerhöhung gemessen. Da diese als Meßflächen verwendeten Flächen S1 und S2 während des Schleifvorganges zugänglich sind, ergibt sich eine gut realisierbare Meßanordnung.

Das zu schleifende Werkstück W, im Ausführungsbeispiel ein geradverzahntes Stirnzahnrad, wird auf den Aufnahmedorn 1 aufgesetzt, an dem zwei paarweise zusammenwirkende Meßsysteme (2,2') angeordnet sind. Jedes Meßsystem 2,2' umfaßt einen stabförmigen Meßkörper 3,3', der an einem Ende eingespannt ist und am anderen Ende einen Taststift 4,4' trägt. Die in Fig.1 erkennbare Stirnfläche S1 des Zahnes Z1 wird vom ersten, die gegenüberliegende Stirnfläche S2 vom zweiten Taststift (4') kontaktiert.

Wenn die Temperatur in der schraffierten Schleiffläche durch die Schleifbearbeitung ansteigt, führt diese Temperaturerhöhung zu einer Vergrößerung der Zahnbreite in axialer Richtung. Diese liegt in der Praxis bei einer Umgebungstemperatur von 20° C und einer Temperatur in der Schleiffläche von etwa 300° C in der Größenordnung von 10 bis 20 Mikrometern, also bei Werten, die auch im rauhen Alltagsbetrieb ausreichend genau gemessen werden können. Die Zahnbreitenvergrößerung hat - wie Fig.1 deutlich macht - eine Auslenkung der stabförmigen Meßkörper 3,3' zur Folge. Die Werte dieser Auslenkung bzw. Verbiegung werden durch auf die Meßkörper 3,3' angeordnete Dehnmeßstreifen 5,5' festgestellt. Selbstverständlich können mehrere derartige Dehnmeßstreifen als Meßelemente auf den Meßkörpern der Meßsysteme angeordnet sein.

In Fig.1 ist weiterhin zu erkennen, daß es vorteilhaft sein kann, nicht nur ein, sondern zwei Paare derartiger Meßsysteme 2 auf dem Aufnahmedorn 1 anzuordnen, um die Zahnbreitenvergrößerung nicht nur hinsichtlich des Zahnes Z1, sondern auch bezüglich des benachbarten Zahnes Z2 zu ermitteln, dessen Zahnflanke F2 zusammen mit der Zahnflanke F1 und dem dazwischenliegenden Zahngrund G die zu schleifende Zahnlücke bildet.

Versuche haben gezeigt, daß die thermische Beeinflussung der zu schleifenden Zahnflanken F1 und F2 durch die Schleifscheibe eine gut meßbare Zahnbreitenänderung zur Folge hat. Bei zu großer Wärmeentwicklung und beginnendem Schleifbrand durch eine sich allmählich abnutzende Schleifscheibe nimmt die Temperatur in der Schleiffläche und damit auch die Zahnbreite zu.
Durch Zurückgreifen auf entsprechende Ergebnisse von Referenzversuchen ist es also möglich, für eine bestimmte Werkstückgeometrie einen Grenzwert für die maximal zulässige Zahnbreitenänderung zu definieren. Über diesem Wert setzt die thermische Schädigung des Gefüges durch Schleifbrand ein.
Unter Einhaltung eines Sicherheitsbereiches kann somit erreicht werden, daß der Schleifvorgang mit einer sich zunehmend abnutzenden Schleifscheibe rechtzeitig beendet wird, bevor thermische Überbeanspruchungen des Werkstückes eintreten.

In der Praxis hat sich weiterhin herausgestellt, daß ein zuverlässigeres Auswerteergebnis dadurch erreicht wird, daß nicht nur ein Paar derartiger Meßsysteme 2 verwendet wird, sondern zwei Paare zur gleichzeitigen Vermessung der benachbarten Zähne Z1 und Z2. Hierdurch kann erreicht werden, daß bei ungleichmäßiger Aufmaßverteilung und daraus resultierender Ungleichmäßigkeit bei der Temperaturentwicklung an den beiden zu schleifenden Zahnflanken F1 und F2 die Grenze zur Entstehung von thermischen Schädigungen des Werkstückes W besser erkannt wird.

Grundsätzlich ist es auch möglich, andere geometrische Größen der Werkstücke W zu messen und aus deren Änderung beim Schleifvorgang auf beginnenden Schleifbrand zu schließen.

Beispielsweise kann die Biegung eines Zahnes im Mikrobereich als Ersatzwert für die Temperaturmessung in der Schleiffläche herangezogen werden. Eine derartige Biegung des Zahnes tritt dadurch auf, daß sich die eine Zahnflanke erwärmt, wogegen die danebenliegende, zum selben Zahn gehörende Zahnflanke Umgebungstemperatur behält.
Auch die Änderung des Zahnraddurchmessers durch Aufheizen eines Zahnes infolge der Schleifbearbeitung kann zur Messung herangezogen werden, da sich der Zahn in radialer Richtung ausdehnt, wenn sich die Temperatur an seiner Oberfläche erhöht.
Auch die Änderung der Zahndicke in Umfangsrichtung, bedingt durch die Temperaturerhöhung durch den Schleifvorgang, kann zur Messung herangezogen werden.

Als Meßelemente können verschiedene Vorrichtungen verwendet werden:
Vor allem bieten sich Tastelemente an, die durch Berührung Änderungen in der Geometrie registrieren. Zum anderen kommen auch induktive Meßelemente, und zwar berührende oder berührungslose, in Frage, die direkt elektrische Signale liefern. Bei den tastenden Elementen bietet sich in der Regel zur hochgenauen Umsetzung der geometrischen Änderungen in elektrische Signale die Verwendung von Dehnmeßstreifen 5 an.

Für den Transfer der gemessenen Daten bieten sich verschiedene Möglichkeiten an. Am naheliegensten ist die Übertragung der Meßdaten durch Kabel zu einer Auswerteeinheit. Denkbar ist aber auch, daß die Meßdaten über Funk an die Auswerteeinheit übertragen werden, womit gewisse Vorteile verbunden sind, da bei der Feinbearbeitung das Werkstück gedreht werden muß, um nacheinander Zahnlücke für Zahnlücke zu schleifen.

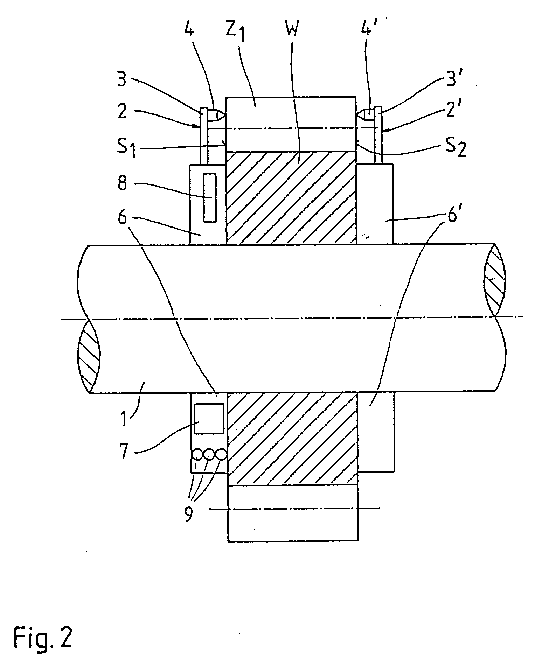

In Fig.2 ist ein zweites Ausführungsbeispiel dargestellt. Das zu schleifende Werkstück W, und zwar wiederum ein geradverzahntes Stirnrad, wird stirnseitig von zwei Meßsystemen 2,2' kontaktiert. Die an Meßkörpern 3,3' angeordneten Taststifte 4,4' dieser Meßsysteme kontaktieren die gegenüberliegenden Stirnflächen S1 und S2 eines Zahnes Z1. Die beiden Meßsysteme 2 sind miteinander über Kabel oder über Funk verbunden. Mindestens eines der Meßsysteme 2,2', die jeweils auf einem Tragkörper 6,6' angeordnet sind, ist mit einer Energieversorgung, beispielsweise einer Batterie 7 und mit einer Auswerteelektronik 8 verbunden. Batterie 7 und Auswerteelektronik 8 sind zusammen mit einer Anzeigevorrichtung im Tragkörper 6 eines der beiden Meßsysteme 2,2' angeordnet. Die Anzeigevorrichtung wird beim Ausführungsbeispiel durch drei Leuchtdioden 9 gebildet.

In der Auswerteelektronik 8 sind die kritischen Werte für die Formänderungen des Werkstückes W abgespeichert, die auf beginnenden Schleifbrand hinweisen. Das Ergebnis der Auswertung wird durch die Leuchtdioden 9 signalisiert. Leuchtet beispielsweise eine grüne Leuchtdiode 9, so verläuft der Prozeß ordnungsgemäß; leuchtet eine gelbe Leuchtdiode 9, bedeutet dies, daß ein Übergangsbereich erreicht ist ist. Wenn eine rote Leuchtdiode 9 aufleuchtet, wird hierdurch signalisiert, daß der Schleifprozeß voraussichtlich schleifbrandgeschädigte Werkstücke W liefert, wobei gleichzeitig ein Abschalten des Schleifvorganges erfolgen kann.

### Bezugszeichenliste:

- 1: Aufnahmedorn
- 2,2': Meßsystem
- 3,3': Meßkörper
- 4,4': Taststift
- 5,5': Dehnmeßstreifen
- 6,6': Tragkörper
- 7: Batterie
- 8: Auswerteelektronik
- 9: Leuchtdiode
- F1: Zahnflanke
- F2: Zahnflanke
- G: Zahngrund
- S1: Stirnfläche
- S2: Stirnfläche
- W: Werkstück
- Z1: Zahn
- Z2: Zahn

## Patentansprüche

1. Verfahren zum vermeiden von thermischen Überbeanspruchungen von Werkstücken beim Schleifen (Schleifbrand), bei dem die durch das Schleifen hervorgerufene Temperaturerhöhung an der dem Schleifvorgang unterworfenen Schleiffläche ermittelt (Istwert), mit einem Referenzwert verglichen und der Schleifvorgang beendet wird, sobald eine Temperaturerhöhung festgestellt ist, die größer ist als der Referenzwert,
**dadurch gekennzeichnet,**
daß die durch Wärmedehnung hervorgerufene Abstandsänderung der die Schleiffläche begrenzenden seitlichen Flächen (S1,S2) des Werkstückes (W) als Ersatzwert der Temperaturerhöhung gemessen wird und daß der Referenzwert, der unter Berücksichtigung eines vorgebbaren Sicherheitsfaktors der kritischen, Schleifbrand bewirkenden Temperaturerhöhung entspricht, unter denselben Parametern des Schleifvorganges mit einem Schleifwerkzeug ermittelt worden ist, das zum Entstehen von Schleifbrand an einem Referenzwerkstück geführt hat.

2. Verfahren nach Anspruch 1, dadurch gekennzeichnet, daß zur Bestimmung des Zustandes des Schleifwerkzeugs jeweils nach dem Schleifen einer vorgebbaren Anzahl von Werkstücken ein Überprüfungswerkstück mit definiertem bezogenen Zeitspanvolumen bearbeitet und die hierbei auftretende Abstandsänderung der die Schleiffläche begrenzenden seitlichen Flächen gemessen und mit dem Referenzwert verglichen wird.

3. Vorrichtung zum Vermeiden von thermischen Überbeanspruchungen von Werkstücken beim Schleifen (Schleifbrand) durch das Verfahren nach Anspruch 1 oder 2 mit einem Aufnahmedorn (1) für das Werkstück (W), dessen Schleiffläche durch zwei seitliche Flächen (S1,S2) begrenzt ist, und mit einem Meßsystem, das mindestens eine der seitlichen Flächen (S1,S2) in der Nähe der Schleiffläche zur Erfassung einer axialen Längenänderung kontaktiert,
**dadurch gekennzeichnet**,
daß mindestens zwei paarweise zusammenwirkende, jeweils eine der beiden die Schleiffläche begrenzenden seitlichen Flächen (S1,S2) des Werkstückes (W) kontaktierende Meßsysteme (2,2') zur Erfassung der axialen Abstandsänderung dieser seitlichen Flächen (S1,S2) und eine Auswerteelektronik (8) angeordnet sind, die den Wert der Abstandsänderung der die Schleiffläche begrenzenden seitlichen Flächen (S1,S2) des Werkstückes (W) mit einem Referenzwert vergleicht und das Ergebnis dieser Auswertung durch eine Anzeigevorrichtung (9) signalisiert.

4. Vorrichtung nach Anspruch 3, dadurch gekennzeichnet, daß jedes Meßsystem (2,2') jeweils einen Meßkörper (3,3') umfaßt, der mit einem an einer der seitlichen Flächen (S1,S2) des Werkstückes (W) anliegenden Taststift (4,4') und mit Meßelementen versehen ist.

5. Vorrichtung nach Anspruch 4, dadurch gekennzeichnet, daß die Meßelemente Dehnmeßstreifen (5,5') sind.

6. Vorrichtung nach einem der Ansprüche 3 bis 5, dadurch gekennzeichnet, daß jedes Meßsystem (2,2') an einem auf den Aufnahmedorn (1) für das Werkstück (W) aufsetzbaren Tragkörper (6,6') angeordnet ist.

7. Vorrichtung nach einem der Ansprüche 3 bis 6, dadurch gekennzeichnet, daß die von den Meßsystemen (2,2') ermittelten Meßwerte über Kabel oder Funk an eine externe Auswerteschaltung übertragen werden.

8. Vorrichtung nach Anspruch 6, dadurch gekennzeichnet, daß in den Tragkörpern (6,6') der Meßsysteme (2,2') sowohl eine Energieversorgungseinrichtung (7), z. B. Batterie, als auch eine mit einer Anzeigevorrichtung (9), z. B. Leuchtdiode, versehene Auswerteelektronik (8) angeordnet ist.

9. Verfahren nach Anspruch 1 oder 2 unter Verwendung einer Vorrichtung nach einem der Ansprüche 3 bis 8 zum Schleifen von Zahnrädern, dadurch gekennzeichnet, daß die Taststifte (4, 4') von vier, paarweise zusammenwirkenden Meßsystemen (2, 2') die seitlichen Flächen (S1 und S2) derjenigen beiden benachbarten Zähne (Z1 und Z2) kontaktieren, deren Zahnflanken (F1, F2) und Zahngrund (G) gerade geschliffen werden.

## Claims

1. Method of avoiding thermal overstressing of workpieces during grinding (grinding burn), in which the temperature increase, caused by the grinding, at the grinding surface subjected to the grinding operation is determined (actual value) and compared with a reference value, and the grinding operation is ended as soon as a temperature increase which is greater than the reference value is established, characterized in that the change in distance, caused by thermal expansion, between the lateral surfaces (S1, S2), defining the grinding surface, of the workpiece (W) is measured as equivalent value of the temperature increase, and in that the reference value, which, with due regard to a predeterminable safety factor, corresponds to the critical temperature increase causing grinding burn, has been determined under the same parameters of the grinding operation with a grinding tool which has led to the development of grinding burn on a reference workpiece.

2. Method according to Claim 1, characterized in that, to determine the state of the grinding tool in each case after the grinding of a predeterminable number of workpieces, a control workpiece is machined with a defined relative rate of metal removal and the change in distance occurring here between the lateral surfaces defining the grinding surface is measured and compared with the reference value.

3. Device for avoiding thermal overstressing of workpieces during grinding (grinding burn) by the method according to Claim 1 or 2, having a mandrel (1) for the workpiece (W), the grinding surface of which is defined by two lateral surfaces (S1, S2), and a measuring system which makes contact with at least one of the lateral surfaces (S1, S2) near the grinding surface for recording an axial change in length, characterized in that at least two measuring systems (2, 2'), interacting in pairs and in each case making contact with one of the two lateral surfaces (S1, S2) of the workpiece (W) which define the grinding surface, for recording the axial change in distance between these lateral surfaces (S1, S2) and an electronic analyzing unit (8) are arranged, which electronic analyzing unit (8) compares the value of the change in distance between the lateral surfaces (S1, S2) of the workpiece (W) which define the grinding surface with a reference value and signals the result of this analysis by an indicating device (9).

4. Device according to Claim 3, characterized in that each measuring system (2, 2') in each case contains a measuring body (3, 3') which is provided with a feeler pin (4, 4'), bearing against one of the lateral surfaces (S1, S2) of the workpiece (W), and with measuring elements.

5. Device according to Claim 4, characterized in that the measuring elements are wire strain gauges (5, 5').

6. Device according to one of Claims 3 to 5, characterized in that each measuring system (2, 2') is arranged on a supporting body (6, 6') which can be put onto the mandrel (1) for the workpiece (W).

7. Device according to one of Claims 3 to 6, characterized in that the measured values determined by the measuring systems (2, 2') are transmitted via cable or radio to an external analyzing circuit.

8. Device according to Claim 6, characterized in that a power-supply means (7), e.g. a battery, as well as an electronic analyzing unit (8) provided with an indicating device (9), e.g. a light-emitting diode, are arranged in the supporting bodies (6, 6') of the measuring systems (2, 2').

9. Method according to Claim 1 or 2 with the use of a device according to one of Claims 3 to 8 for grinding gears, characterized in that the feeler pins (4, 4') of four measuring systems (2, 2') interacting in pairs make contact with the lateral surfaces (S1 and S2) of those two adjacent teeth (Z1 and Z2) whose tooth flanks (F1, F2) and tooth root (G) are ground straight.

## Revendications

1. Procédé destiné à éviter des sollicitations thermiques excessives de pièces lors de la rectification (surchauffe de meulage), selon lequel l'élévation de température produite par la rectification (valeur réelle) au niveau de la surface à rectifier soumise à l'opération de rectification, est déterminée, puis comparée à une valeur de référence, l'opération de rectification étant interrompue dès que l'on détecte une élévation de température supérieure à la valeur de référence, caractérisé en ce que l'on mesure en guise de valeur équivalente de l'élévation de température, la variation de distance produite par la dilatation thermique, entre les surfaces latérales (S1, S2) de la pièce (W), qui délimitent la surface à rectifier, et en ce que la valeur de référence, qui correspond, en tenant compte d'un facteur de sécurité pouvant être prédéfini, à l'élévation critique de température produisant la surchauffe de meulage, a été déterminée avec les mêmes paramètres que l'opération de rectification, au moyen d'un outil de rectification qui a conduit à la surchauffe de meulage sur une pièce de référence.

2. Procédé selon la revendication 1, caractérisé en ce que pour la détermination de l'état de l'outil de rectification, on usine, après la rectification d'un nombre prédéterminé de pièces, une pièce de test, avec un taux d'enlèvement de copeaux spécifique, défini, et l'on mesure la variation de distance entre les surfaces latérales délimitant la surface à rectifier, cette variation de distance étant comparée à la valeur de référence.

3. Dispositif destiné a éviter des sollicitations thermiques excessives de pièces lors de la rectification (surchauffe de meulage), par le procédé selon la revendication 1 ou 2, comprenant un mandrin de montage (1) pour la pièce (W) dont la surface à rectifier est délimitée par deux surfaces latérales (S1, S2), ainsi qu'un système de mesure qui est en contact avec l'une au moins des surfaces latérales (S1, S2), à proximité de la surface à rectifier, en vue de détecter une variation de longueur axiale, caractérisé en ce que sont mis en place au moins deux systèmes de mesure (2, 2') coopérant par paire, dont chacun est en contact avec l'une des deux surfaces latérales (S1, S2) délimitant la surface à rectifier de la pièce (W), pour relever la variation de distance axiale entre ces surfaces latérales (S1, S2), le dispositif comportant également une électronique de traitement des données (8), qui compare la valeur de la variation de distance entre les surfaces latérales (S1, S2) de la pièce (W), qui délimitent la surface à rectifier, à une valeur de référence, et indique le résultat de ce traitement par un dispositif de visualisation (9).

4. Dispositif selon la revendication 3, caractérisé en ce que chaque système de mesure (2, 2') comporte un corps de mesure (3, 3'), qui est pourvu d'un palpeur (4, 4') s'appuyant sur l'une des surfaces latérales (S1, S2) de la pièce (W), et d'éléments de mesure.

5. Dispositif selon la revendication 4, caractérisé en ce que les éléments de mesure sont des jauges de contrainte (5, 5').

6. Dispositif selon l'une des revendications 3 à 5, caractérisé en ce que chaque système de mesure (2, 2') est disposé sur un corps de support (6, 6') pouvant être rapporté sur le mandrin de montage (1) de la pièce (W).

7. Dispositif selon l'une des revendications 3 à 6, caractérisé en ce que les valeurs de mesure déterminées par les systèmes de mesure (2, 2') sont transmises par câble ou liaison radio, à un circuit de traitement extérieur.

8. Dispositif selon la revendication 6, caractérisé en ce que dans les corps de support (6, 6') des systèmes de mesure (2, 2'), sont disposés, aussi bien un ensemble d'alimentation en énergie (7), par exemple une batterie, qu'une électronique de traitement des données (8) munie d'un dispositif de visualisation (9), par exemple une diode électroluminescente.

9. Procédé selon la revendication 1 ou 2, mettant en oeuvre le dispositif selon l'une des revendications 3 à 8, pour la rectification de roues dentées, caractérisé en ce que les palpeurs (4, 4') de quatre systèmes de mesure (2, 2') coopérant par paire, sont en contact avec les surfaces latérales (S1 et S2) des deux dents voisines (Z1 et Z2) dont les flancs de dents (F1, F2) et le fond de dent (G) sont justement entrain d'être rectifiés.
